# EUROPÄISCHE PATENTSCHRIFT

(11) **EP 1 981 165 B1**
(45) Veröffentlichungstag und Bekanntmachung des Hinweises auf die Patenterteilung: **18.11.2020**
(21) Anmeldenummer: 08102613.0
(22) Anmeldetag: 14.03.2008
(51) Int. Cl.: H02P 25/08, H02P 25/00, H02P 25/092

(54) **Verfahren zur Steuerung eines Reluktanzmotors**
Method for controlling a reluctance motor
Procédé de commande d'un moteur à reluctance

(30) Priorität: 22.03.2007 DE 102007013724
(43) Veröffentlichungstag der Anmeldung: 15.10.2008
(73) Patentinhaber: Vorwerk & Co. Interholding GmbH, 42275 Wuppertal (DE)
(72) Erfinder: Caldewey, Uwe, 44229, Dortmund (DE)
(74) Vertreter: Müller, Enno

(56) Entgegenhaltungen:
- EP-A2- 0 692 865
- WO-A2-00/74205
- WO-A2-01/59922
- US-A- 4 739 240
- US-A1- 2002 121 876
- REINERT J ET AL: "A Switched Reluctance Drive for Electric Vehicles with Optimized Efficiency in each Working Point", ELECTRIC VEHICLE SYMPOSIUM, XX, XX, 29. September 1998 (1998-09-29), Seiten 1-8, XP002956790,

## Beschreibung

Die Erfindung betrifft ein Verfahren zur Steuerung eines Reluktanzmotors nach den Merkmalen des Oberbegriffes des Anspruches 1.

Reluktanzmotoren arbeiten grundsätzlich mit Gleichspannung. Für den Betrieb ist ein Zwischenkreis erforderlich. Wesentliche Verluste fallen bei solchen Motoren insbesondere in den Wicklungen von Rotor und Stator an, sowie weiter im Eisen. Ein Verfahren zur Steuerung eines solchen Reluktanzmotors ist bspw. aus der DE 102 29 443 A1 bekannt.

Aus der WO 00/74205 A2 ist ein Reluktanzmotor mit acht Hauptwicklungen bekannt, wobei die Einschaltung des Hauptstromes nach einem Phasenwechsel verzögert erfolgt. Weiter ist es aus der EP 0 692 865 A2 bekannt, einen Zeitgeber vorzusehen, der Anschalt- und Ausschaltsignale gibt, bei welchen folgend einem Ausschaltsignal eine Zeitverzögerung bis zum nächsten Anschaltsignal vorgesehen sein kann. Darüber hinaus ist es aus der WO 01/59922 A2 bekannt, in einem Generatorbetrieb, den Anschalt- und/oder den Ausschaltwinkel zu ändern. Aus der US 2002/0121876 A1 ist es allgemein bekannt, bei einem Reluktanzmotor den Ein- oder Ausschaltwinkel zu verändern.

Ausgehend von dem dargelegten Stand der Technik beschäftigt sich die Erfindung mit der Aufgabenstellung, einen Reluktanzmotor anzugeben, bei welchem der Einschaltzeitpunkt einer Phase abweichend von einer geometrischen Teilung des Winkelbereichs jeder Spule verzögert gewählt wird, während der Ausschaltzeitpunkt entsprechend der geometrischen Teilung beibehalten wird, und bei welchem zugleich eine möglichst hohe Leistungsfähigkeit gegeben ist.

Diese Aufgabe ist beim Gegenstand des Anspruches 1 gelöst, wobei darauf abgestellt ist, dass auf eine Spule eine höhere Spannung angelegt wird, als es der Auslegungsspannung des Reluktanzmotors bei Bestromung einer Phase über den vollen Winkelbereich entspricht und dass die höhere Spannung über eine solche verkürzte Zeit auf den Motor eingewirkt wird, dass sich keine erhöhte Erwärmung ergibt.

Die Auslegungsspannung des an einer Nominalspannung von beispielsweise 230 Volt betriebenen Reluktanzmotors wird bei einer reduzierten Bestromung auf den sich neu ergebenden Effektivwert bezogen, so beispielsweise auf 200 bis 220 Volt, weiter beispielsweise 209 Volt. Mit Reduzierung der Bestromung ist im Sinne der Erfindung eine nicht über die volle Dauer erfolgte Bestromung gemeint, deren Stromhöhe jedoch nicht verändert wird. Die gegenüber der Motorauslegung (beispielsweise 209 Volt) höhere Spannung wirkt über eine verkürzte Zeit auf den Motor ein, so dass sich im Mittel - insbesondere durch die beschriebene Umverteilung der Verluste - keine erhöhte Erwärmung ergibt.

Einschalt- und Ausschaltzeitpunkt werden insbesondere über Sensoren erfasst. Diesbezüglich ist es bekannt, eine Rotorlageerkennung vorzusehen. Aufgrund der bei Reluktanzmotoren in der Regel üblichen hohen Drehzahlen von mehr als 400 U/min, weiter mehr als 1.000 U/min bis hin zu 30.000 U/min und mehr wird ein zweiphasiger SR-Motor verwendet. Der Vorteil liegt hierbei in der geringen Anzahl von Schaltvorgängen pro Umdrehung, so dass sich die Verlustleistung der Elektronik günstig gestalten lässt. Bei einem solchen zweiphasigen Motor werden vier Schritte pro 360-Grad-Umdrehung durchgeführt. Jede Phase schaltet demnach zweimal pro Umdrehung. Hieraus resultiert eine geometrische Teilung von 90 Grad. Zur Erkennung der Position wird in der Regel ein Sensor verwendet, der statische Signale liefert. Für einen Bereich von 90 Grad wird abwechselnd eine logisch Null oder eine logisch Eins signalisiert. Der Umschaltpunkt der Sensorik liegt im Bereich der sogenannten alligned position. Aufgrund der fehlenden Strombegrenzung wird der Motor beim Hochlaufen mit einer Pulsweitenmodulation angesteuert. Hierbei ist die Pulsbreite so bemessen, dass ein begrenzter Strom eingestellt ist. Der schnelldrehende SR-Motor verhält sich günstiger, wenn anstelle des möglichen geometrischen 90-Grad-Winkelbereiches ein Schaltwinkelbereich gewählt wird, der demgegenüber geringer ist. Dies ist erreicht durch Verlagerung des Einschaltzeitpunktes zu einem in Rotordrehrichtung verspäteten Zeitpunkt, während der Ausschaltzeitpunkt dem der geometrischen Teilung entspricht. Gleiches gilt auch für bspw. vierphasige SR-Motoren mit vier Rotorsegmenten und sechs zugeordneten Spulen, wobei dann der geometrische Winkelbereich 60 Grad entspricht. Auch bei einer solchen Konfiguration ist erfindungsgemäß der Einschaltzeitpunkt der jeweiligen Phase verzögert gewählt, dies bei Beibehaltung des Ausschaltzeitpunktes.

Die treibende Spannung wird gleichzeitig erhöht. Der schnelldrehende SR-Motor wird demnach für den Betrieb an einer Überspannung ausgelegt. Ist bspw. die Nominalspannung 230 Volt, so wird der vollbestromte Motor (also der über den kompletten geometrischen Winkelbereich bestromte Motor) für 190 bis 210 Volt ausgelegt. Es kommt durch das vorgeschlagene Verfahren zu einer Umverteilung der Verluste. Die Kupferverluste sinken, wohingegen die Eisenverluste zunehmen. Bei einer Kühlung des Motors über die Außenfläche ergibt sich hierdurch noch ein weiterer Vorteil. Durch die Absenkung der Kupferverluste ist hinsichtlich der Kühlung weniger Kupfer erforderlich. Des Weiteren ist durch das vorgeschlagene Verfahren der Betrieb mit einem kleinen Zwischenkreiskondensator möglich. Selbst der Betrieb mit einem Elektrolytkondensator ist nicht erforderlich. Vielmehr kann ein üblicher Kondensator, bspw. ein 3- bis 6 µF-Kondensator, weiter bspw. ein 4,7 µF-Kondensator Anwendung finden.

Weiter ist vorgesehen, dass der Verzögerungs-Winkelbereich 10 % oder mehr der geometrischen Teilung entspricht, so bei einem zweiphasigen Motor und entsprechender geometrischer Teilung von 90 Grad 9 Grad oder mehr. Entsprechend ist der Einschaltzeitpunkt um diesen Winkelgrad verzögert, was weiter eine Verringerung des phasenweisen Einschaltwinkelbereiches zur Folge hat. So erfolgt eine Bestromung der geschalteten Phase nur bspw. über einen Winkelbereich, der 90 % oder weniger des geometrischen Winkelbereiches entspricht. Der Ausschaltzeitpunkt der Phase wird hierbei stets beibehalten, lediglich der Einschaltzeitpunkt wird mit höherer Spannung verzögert. In einer Weiterbildung ist vorgesehen, dass der Verzögerungs-Winkelbereich bevorzugt 20 bis 25 % der geometrischen Teilung entspricht, so weiter bevorzugt etwa 18 bis 22,5 Grad bei einem zweiphasigen Motor, was einer Bestromung der Phase entsprechend über 67,5 bis 72 Grad entspricht. Bei einem vierphasigen Motor würde eine Bestromung nicht dem geometrischen Winkelbereich von 60 Grad entsprechen, sondern vielmehr durch Verzögerung des Einschaltzeitpunktes um 12 bis 15 Grad nur 45 bis 48 Grad. Als besonders vorteilhaft erweist es sich, wenn der Verzögerungs-Winkelbereich bei einem geometrischen Winkelbereich von 90 Grad 20 Winkelgraden entspricht. Anstelle der möglichen 90 Grad werden je Phase nur 70 Grad bestromt. Hieraus resultiert eine Reduzierung der Kupferverluste von ca. 10 bis 20 %.

Nachstehend ist die Erfindung anhand der beigefügten Zeichnung, welche lediglich ein Ausführungsbeispiel darstellt, näher erläutert. Es zeigt:
- Fig. 1: in einer schematischen Darstellung einen zweiphasigen Motor;
- Fig. 2: ein Diagramm zur Veranschaulichung des Bestromungs-Winkel-bereiches im Vergleich zum geometrischen Winkelbereich, bezogen auf eine zu bestromende Phase.

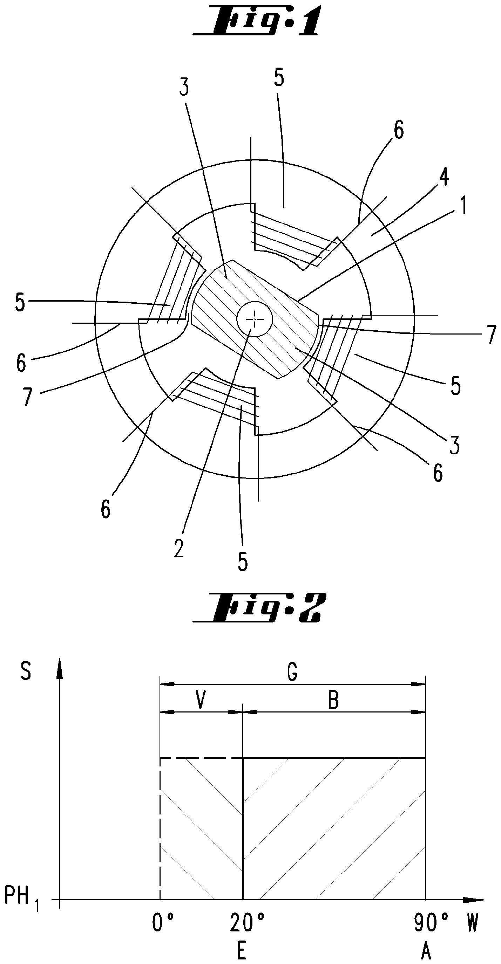

In Fig. 1 ist schematisch ein zweiphasiger Reluktanzmotor dargestellt. Der drehfest auf einer Rotorwelle 2 sitzende Rotor 1 weist zwei sich diametral gegenüberliegende Rotorpole (Rotorsegmente) 3 auf.

Der den Rotor 1 umgebende Stator 4 weist vier in Umlaufrichtung des Rotors 1 jeweils einen Winkel von 90 Grad zueinander einnehmende Statorpole 5 auf. Diese tragen jeweils Spulen 6 bildende Statorwicklungen.

Zwischen den Rotorpolen 3 und den korrespondierenden Statorpolen 5 verbleibt im Betrieb ein ringförmiger Luftspalt 7.

Bei einem derartigen zweiphasigen Motor werden vier Schritte pro 360-Grad-Umdrehung des Rotors 1 durchgeführt. Jede Phase schaltet demnach zweimal pro Umdrehung. Zur Erkennung der Rotorposition wird ein nicht dargestellter Sensor (Rotorlageerkennung) verwendet, der Signale S liefert.

In Fig. 2 ist eine schematische Grafik dargestellt, in welcher in Abhängigkeit von den Sensorsignalen S die Bestromung der Phase PH₁ abgetragen ist. Entsprechend der zweiphasigen Auslegung des Motors werden Sensorsignale in jeder 90-Grad-Stellung des Rotors 1 gesendet, woraus sich ein geometrischer Winkelbereich G von 90 Grad einstellt. So wird bei 0 Grad über den Sensor ein erstes Signal geliefert und nach in Rotordrehrichtung betrachteten 90 Grad ein weiteres Signal, welches zugleich den Ausschaltzeitpunkt A der Phasenbestromung darstellt.

Der Einschaltzeitpunkt E der Phasenbestromung ist gegenüber dem geometrischen Winkelbereich G verzögert. Entsprechend erfolgt über einen vordefinierten Verzögerungs-Winkelbereich V zunächst keine Phasenbestromung, so in dem dargestellten Ausführungsbeispiel über die ab dem ersten Sensorsignal gemessenen ersten zwanzig Winkelgraden. Demzufolge erfolgt eine Bestromung der Phase PH₁ in dem dargestellten Ausführungsbeispiel nur über einen Bestromungs-Winkelbereich B von 70 Grad.

Da der Ausschaltzeitpunkt entsprechend der geometrischen Teilung G beibehalten ist, wird keine Phasenüberlappung insbesondere bei sehr hohen Drehzahlen von mehreren tausend U/min erreicht. Vielmehr schaltet eine Phase entsprechend der geometrischen Teilung im vorgegebenen Ausschaltzeitpunkt A ab, während die nächste Phase um den Verzögerungs-Winkelbereich V später erst einschaltet.

Das vorgeschlagene Verfahren kann durchaus bei drehzahlregulierbaren Motoren erst bei Überschreiten einer vorbestimmten Drehzahl, bspw. bei Überschreiten von 400 U/min oder mehr zur Wirkung kommen, während bei demgegenüber niedrigeren Drehzahlen durchaus auch ein anderes Steuerverfahren zur Anwendung kommen kann, welches entsprechend auf niedrige Drehzahlen abgestimmt ist.

## Patentansprüche

1. Verfahren zur Steuerung eines Reluktanzmotors mit einem Rotor (1) und einem Stator (4), wobei der Rotor (1) eine Mehrzahl von Rotorsegmenten (3) aufweist und der Stator (4) eine davon abhängige Anzahl von Spulen (6), bei zwei Rotorsegmenten (3) nämlich vier Spulen (6), aufweist und mit einer Ansteuervorrichtung, welche über einen bestimmten Winkelbereich der Bewegung des Rotors (1) zwischen einem Einschaltzeitpunkt (E) und einem Ausschaltzeitpunkt (A) eine Spannung auf eine Spule (6) einer jeweiligen Phase (PH₁) des Stators (4) anlegt, wobei der Einschaltzeitpunkt (E) einer Phase (PH₁) abweichend von einer geometrischen Teilung (G) des Winkelbereichs jeder Spule (6) verzögert, d.h. später als es der geometrischen Teilung (G) entspricht, gewählt wird, **dadurch gekennzeichnet, dass**
der Ausschaltzeitpunkt (A) entsprechend der geometrischen Teilung (G) beibehalten wird, dass auf eine Spule eine höhere Spannung angelegt wird, als es der Auslegungsspannung des Reluktanzmotors bei Bestromung einer Phase über den vollen Winkelbereich entspricht und dass mit der höheren Spannung über eine solche verkürzte Zeit auf den Motor eingewirkt wird, dass sich keine erhöhte Erwärmung ergibt.

2. Verfahren nach Anspruch 1, **dadurch gekennzeichnet, dass** der Verzögerungs-Winkelbereich (V) 10 % oder mehr der geometrischen Teilung (G) entspricht.

3. Verfahren nach Anspruch 2, **dadurch gekennzeichnet, dass** der Verzögerungs-Winkelbereich (V) 20 bis 25 % der geometrischen Teilung (G) entspricht.

4. Verfahren nach einem der vorhergehenden Ansprüche, **dadurch gekennzeichnet, dass** der Verzögerungs-Winkelbereich (V) bei einem geometrischen Winkelbereich (G) von 90 Grad zwanzig Winkelgraden entspricht.

## Claims

1. Method for controlling a reluctance motor comprising a rotor (1) and a stator (4), the rotor (1) having a plurality of rotor segments (3) and the stator (4) having a number of coils (6) dependent thereon, specifically four coils (6) for two rotor segments (3), and the motor comprising a control device which applies a voltage to a coil (6) of a particular phase (PH₁) of the stator (4) over a specific angular range of the movement of the rotor (1) between a switch-on time (E) and a switch-off time (A), the switch-on time (E) of a phase (PH₁) being selected to be delayed, so as to deviate from a geometric pitch (G) of the angular range of each coil (6), i.e. to be later than corresponds to the geometric pitch (G), **characterised in that** the switch-off time (A) is maintained so as to correspond to the geometric pitch (G), **in that** a higher voltage is applied to a coil than corresponds to the design voltage of the reluctance motor when a phase is energised over the full angular range, and **in that** the higher voltage acts on the motor for such a shortened time that there is no increased heating.

2. Method according to claim 1, **characterised in that** the delay angular range (V) corresponds to 10% or more of the geometric pitch (G).

3. Method according to claim 2, **characterised in that** the delay angular range (V) corresponds to 20 to 25% of the geometric pitch (G).

4. Method according to any of the preceding claims, **characterised in that** the delay angular range (V), for a geometric angular range (G) of 90 degrees, corresponds to twenty angular degrees.

## Revendications

1. Procédé de commande d'un moteur à réluctance avec un rotor (1) et un stator (4), dans lequel le rotor (1) présente une pluralité de segments de rotor (3) et le stator (4) présente un nombre de bobines (6) dépendant de celle-ci, à savoir quatre bobines (6) dans le cas de deux segments de rotor (3), et avec un dispositif de commande qui applique une tension à une bobine (6) d'une phase respective (PH₁) du stator (4) sur une plage angulaire déterminée du mouvement du rotor (1) entre un instant d'activation (E) et un instant de coupure (A), dans lequel l'instant d'activation (E) d'une phase (PH₁) est choisi retardé de manière à être en décalage par rapport à un pas géométrique (G) de la plage angulaire de chaque bobine (6), c'est-à-dire plus tard que ce qui correspond au pas géométrique (G), **caractérisé en ce que** le temps de coupure (A) est conservé en correspondance au pas géométrique (G), **en ce qu'**est appliquée à une bobine une tension plus élevée que celle correspondant à la tension nominale du moteur à réluctance lors de l'alimentation d'une phase sur toute la plage angulaire, et **en ce que** le moteur est alimenté avec la tension plus élevée pendant une durée si courte qu'il ne se produit pas d'échauffement accru.

2. Procédé selon la revendication 1, **caractérisé en ce que** la plage angulaire de retard (V) correspond à 10 % ou plus du pas géométrique (G).

3. Procédé selon la revendication 2, **caractérisé en ce que** la plage angulaire de retard (V) correspond à 20 à 25 % du pas géométrique (G).

4. Procédé selon l'une des revendications précédentes, **caractérisé en ce que** la plage angulaire de retard (V) correspond à vingt degrés angulaires pour une plage angulaire géométrique (G) de 90 degrés.
